# EUROPEAN PATENT APPLICATION

(11) **EP 4 407 080 A2**
(43) Date of publication of application: **31.07.2024**
(21) Application number: 24154134.1
(22) Date of filing: 26.01.2024
(51) Int. Cl.: D01D 5/06, D01F 9/04

(54) **AEROGEL FIBER**

(30) Priority: 30.01.2023 US 202363482075 P; 02.01.2024 US 202418402071
(71) Applicant: Nano and Advanced Materials Institute Limited, Shatin, New Territories (HK)
(72) Inventor: O, Wing Nien Wylie, Hong Kong (HK); DONG, Chenghe, Hong Kong (HK); REN, Changbao, Hong Kong (HK); DAN, Cheng, Hong Kong (HK)
(74) Representative: Modiano, Gabriella Diana

(57) **Abstract**

An aerogel fiber including an aerogel polymer selected from the group consisting of polylactic acid (PLA), sodium alginate, cellulose, oxidized cellulose, and a mixture thereof, wherein the aerogel polymer is optionally crosslinked with a crosslinking agent and the aerogel fiber has a linear density 0.20 tex or less, a fiber tenacity of 5 to 20 cN/tex, an elongation at break of 3 to 20%, and an average diameter between 5 µm to 200 µm.

## Description

### CROSS-REFERENCE TO RELATED APPLICATIONS

The present application claims priority from U.S. Provisional Patent Application No. 63/482,075, filed on January 30, 2023, which is hereby incorporated by reference in its entirety.

### TECHNICAL FIELD

Provided herein is an aerogel fiber useful for preparing lightweight textiles with high thermal insulation performance.

### BACKGROUND

There is a demand for fibers that are sustainable, ultralight, and capable of providing warmth when incorporated into a garment or other textile.

Responsible wool has become an increasingly important material in outdoor fashion garments with benefits in providing comfort to users. Wool fabrics require thick construction for use in extreme weather conditions. In addition, wool's wet-pickup is high compared to most synthetic fabrics. These properties limit wool for use in ultralight performance active wear under cold and extreme weather conditions.

There are ultralight hollow fibers in the market with high air porosities owing to their heat retention properties. Heat loss in these fibers, however, is prominent via convection through their sheath structures from its micro-scale hollow core. In addition, commercial hollow fibers are commonly available as insulation fillers and not suitable for knitted fabric; they are synthetic in nature and thus not sustainable. Hollow fibers from regenerated cellulose are also available in the market, yet they are not suitable for use in thermal insulation applications owing to their very high water retention capacity. They are more ideal for use as moisture regulating fabrics and as wound dressings.

There is a need for improved ultralight fibers with high air porosities that can be fabricated using sustainable resources. These fibers, when suitably knitted into fabric along with conventional fibers, can provide light-weight fabric having high thermal insulation performance against extreme weather, and can be used in outdoor fashion garments and performance active wear for use in cold and extreme weather conditions.

### SUMMARY

The present disclosure relates to an aerogel fiber that exhibits one or more of high thermal insulation, low water retention, high moisture wicking, and low water retention properties. Advantageously, the aerogel fiber described herein can be prepared using raw materials manufactured from sustainable sources.

In a first aspect, provided herein is an aerogel fiber comprising an aerogel fiber comprising an aerogel polymer selected from the group consisting of polylactic acid (PLA), sodium alginate, cellulose, oxidized cellulose, and a mixture thereof, wherein the aerogel polymer is optionally crosslinked with a crosslinking agent and the aerogel fiber has a linear density 0.20 tex or less, a fiber tenacity of 5 to 20 cN/tex, an elongation at break of 3 to 20%, and an average diameter between 5 µm to 200 µm.

In certain embodiments, the aerogel polymer comprises cellulose, 2,2,6,6-tetramethylpiperidine 1-oxyl (TEMPO)-oxidized cellulose, microfibrillated cellulose, TEMPO-oxidized microfibrillated cellulose, cellulose nanofibrils, or a mixture thereof.

In certain embodiments, the aerogel polymer is crosslinked with a crosslinking agent selected from the group consisting of methyltrimethoxysilane, 1,4-butanediol diglycidyl ether (BDDE), trimethylolpropane triglycidyl ether, pentaerythritol tetraglycidyl ether, a salt, and a mixture thereof.

In certain embodiments, the aerogel polymer is crosslinked with calcium chloride.

In certain embodiments, the aerogel polymer comprises sodium alginate.

In certain embodiments, the aerogel fiber further comprises hydrophobic alkylsilanes, aliphatic esters, or a combination thereof grafted on an exterior surface of the aerogel fiber.

In certain embodiments, the aerogel fiber has an average diameter of 5 to 30 µm.

In certain embodiments, the aerogel fiber has a fiber tenacity of 15 to 20 cN/tex.

In certain embodiments, the aerogel fiber has a liner density between 0.1 to 0.2 tex.

In certain embodiments, the aerogel is mesoporous, nanoporous, or microporous.

In certain embodiments, the aerogel fiber comprises pores having an average diameter between 100 to 250 nm.

In certain embodiments, the aerogel fiber comprises sodium alginate, the aerogel fiber has a fiber tenacity of 15 to 20 cN/tex, an average diameter between 15 µm to 20 µm, a liner density between 0.15 to 0.2 tex, and the aerogel fiber comprises pores having an average diameter between 100 to 250 nm.

In a second aspect, provided herein is a textile comprising the aerogel fiber described herein.

In certain embodiments, the aerogel fiber comprises sodium alginate, the aerogel fiber has a fiber tenacity of 15 to 20 cN/tex, an average diameter between 15 µm to 20 µm, and a liner density between 0.15 to 0.20 tex, and the aerogel fiber comprises pores having an average diameter between 100 to 250 nm.

In certain embodiments, the textile is selected from the group consisting of a staple fiber, a yarn, a fabric, a garment, a linen, a drapery, an upholstery, and combinations thereof.

In certain embodiments, the textile further comprises one or more additional fibers selected from the group consisting of a natural fiber, a synthetic fiber, a semi-synthetic fiber, and a combination thereof.

In certain embodiments, the aerogel fiber and the one or more additional fibers are present at a mass ratio between 1:9 to 9:1 in the textile.

In certain embodiments, the textile further comprises wool, wherein the textile has a higher thermal resistance and a lower mass as compared with an equivalent textile consisting of wool.

In a third aspect, provided herein is a method of preparing the aerogel fiber described herein, the method comprising: providing a spinning solution comprising the aerogel polymer; wet-spinning the spinning solution thereby forming a filament comprising the aerogel polymer; wet-stretching the filament; thereby forming a wet-stretched filament; and freeze-drying the wet-stretched filament thereby forming the aerogel fiber.

In certain embodiments, the step of wet-spinning the spinning solution comprises passing the spinning solution through a multifilament spinneret at a flow rate between 0.1 to 5 meters/minute into a coagulation bath comprising calcium chloride.

In certain embodiments, the step of wet-stretching comprises stretching the filament at 30 to 60° C at a total drawing ratio between 100-500%.

In certain embodiments, the step of wet-spinning the aerogel polymer comprises passing the solution through a multifilament spinneret of 50 to 100 microns in diameter at a temperature of 70-90° C and a flow rate between 2.5 to 3 meters/minute into a coagulation bath comprising calcium chloride; and the step of wet-stretching comprises stretching the filament at 40 to 50° C at a total drawing ratio between 300-350%.

### BRIEF DESCRIPTION OF THE DRAWINGS

The above and other objects and features of the present disclosure will become apparent from the following description of the disclosure, when taken in conjunction with the accompanying drawings.
**Figure 1** depicts a cross-sectional view of an aerogel fiber in accordance with certain embodiments described herein.
**Figure 2** depicts cross-sectional view of an aerogel fiber prepared at freezing temperature of -20 °C and coagulation bath of 5 % w/w.
**Figure 3** depicts cross-sectional view of an aerogel fiber prepared at freezing temperature of -20 °C and coagulation bath of 10 % w/w.
**Figure 4** depicts cross-sectional view of an aerogel fiber prepared at freezing temperature of -50 °C and coagulation bath of 5 % w/w.

### DETAILED DESCRIPTION

### Definitions

Throughout the application, where compositions are described as having, including, or comprising specific components, or where processes are described as having, including, or comprising specific process steps, it is contemplated that compositions of the present teachings can also consist essentially of, or consist of, the recited components, and that the processes of the present teachings can also consist essentially of, or consist of, the recited process steps.

In the application, where an element or component is said to be included in and/or selected from a list of recited elements or components, it should be understood that the element or component can be any one of the recited elements or components, or the element or component can be selected from a group consisting of two or more of the recited elements or components. Further, it should be understood that elements and/or features of a composition or a method described herein can be combined in a variety of ways without departing from the spirit and scope of the present teachings, whether explicit or implicit herein.

It should be understood that the order of steps or order for performing certain actions is immaterial so long as the present teachings remain operable. Moreover, two or more steps or actions may be conducted simultaneously.

The use of the singular herein includes the plural (and vice versa) unless specifically stated otherwise. In addition, where the use of the term "about" is before a quantitative value, the present teachings also include the specific quantitative value itself, unless specifically stated otherwise.

As used herein, the term "about" refers to a ±10%, ±7%, ±5%, ±3%, ±1%, or ±0% variation from the nominal value unless otherwise indicated or inferred.

Provided herein is an aerogel fiber comprising an aerogel polymer selected from the group consisting of polylactic acid (PLA), sodium alginate, cellulose, oxidized cellulose, and a mixture thereof, wherein the aerogel polymer is optionally crosslinked with a crosslinking agent and the aerogel fiber has a linear density 0.20 tex or less, fiber tenacity of 5 to 20 cN/tex, elongation at break of 3 to 20%, and an average diameter between 5 µm to 200 µm.

In certain embodiments, the aerogel polymer comprises cellulose, 2,2,6,6-tetramethylpiperidine-1-xyl (TEMPO)-oxidized cellulose, microfibrillated cellulose, TEMPO-oxidized microfibrillated cellulose, cellulose nanofibrils, or a mixture thereof. In certain embodiments, the aerogel polymer does not comprise polyvinyl alcohol or polypyrrole.

In certain embodiments, the aerogel polymer comprises sodium alginate having a viscosity of 500 to 600 mPa.s (1% in water), and can be optionally crosslinked with a crosslinking agent.

In certain embodiments, the aerogel polymer comprises PLA having an average molecular weight of 170 kg/mol. In certain embodiments, the aerogel polymer comprises PLA sold under the tradename Luminy^{®} L130 sold by TotalEnergies Corbion.

The aerogel polymer can be derived from any source. In certain embodiments, the aerogel polymer is prepared from cellulose derived from one or more of spent corn husk, paper pulp, wood pulp, rice husk, and fruit peels.

In certain embodiments, the aerogel polymer is crosslinked with a crosslinking agent. The crosslinking agent can be any crosslinking agent comprising 2, 3, 4, 5, or more electrophilic species capable of reacting with the nucleophiles present in the aerogel polymer. In certain embodiments, the crosslinking agent is selected from the group consisting of methyltrimethoxysilane, 1,4-butanediol diglycidyl ether (BDDE), trimethylolpropane triglycidyl ether, pentaerythritol tetraglycidyl ether, 1,6-hexanediol diglycidyl ether, poly(ethylene glycol) diglycidyl ether, diglycidyl ethers of bisphenol A, and mixtures thereof. In certain embodiments, the crosslinking agent is BDDE.

In certain embodiments, the crosslinking agent is a salt comprising at least one cation and at least one anion, wherein the cation has a charge of +1, +2, +3, +4, or +5, and the salt is capable of binding with one or more substituents present in the aerogel polymer via ionic and/or hydrogen bonding interactions. In certain embodiments, the crosslinking agent is a salt comprising Li⁺, Ca²⁺, Mg²⁺, Cu¹⁺, Cu²⁺, Zn²⁺, or Al³⁺. The salt can comprise any anion. Suitable anions include, but are not limited to, halides, nitrate, phosphate, carbonate, sulfate, acetate, alkoxides, and the like. In certain embodiments, the crosslinking agent is selected from the group consisting of calcium chloride, lithium chloride, copper chloride, zinc chloride, and aluminum chloride. In certain embodiments, the crosslinking agent is calcium chloride.

The aerogel fiber can be microporous (<2 nm), mesoporous, nanoporous (2-50 nm), macroporous (>50 nm), or a combination thereof. In certain embodiments, aerogel fiber is nanoporous (1-100 nm). In certain embodiments, the aerogel fiber comprises pores having an average size between 1-20 nm, 20-100 nm, 100-500 nm, 500-1,000 nm, or 1,000-3,000 nm, or combinations thereof. In certain embodiments, the aerogel fiber comprises pores having an average size between 100-250 nm.

The water resistance of the aerogel fiber can be improved by surface modification using a hydrophobic agent selected from alkylsilanes, aliphatic esters, and mixtures thereof. The hydrophobic agent can be reacted with an exterior surface of the aerogel fiber thereby lowering the surface energy of the aerogel fiber and increasing the water contact angle. Any hydrophobic agent that can react with nucleophiles present on the surface of the aerogel fiber and resulting in a decrease in surface energy can be used. Exemplary hydrophobic agents include, but are not limited to C₈-C₂₀ alkyl acyl halides, C₈-C₂₀ alkyl anhydrides, (C₈-C₂₀ trialkyl)(halo)silane, and mixtures thereof.

In certain embodiments, the aerogel fiber further comprises a vitamin, moisturizer, a surfactant, a fragrance, a sunscreen, a color stabilizer, a pigment, or a mixture thereof.

Advantageously, the aerogel fiber described herein can have an average diameter between 5 to 200 µm, which can improve hand feel. In certain embodiments, the aerogel fiber described herein can have an average diameter between 5 to 200 µm, 5 to 150 µm, 5 to 100 µm, 5 to 75 µm, 5 to 50 µm, 5 to 40 µm, 5 to 30 µm, 10 to 30 µm, 10 to 25 µm, 10 to 20 µm, 15 to 20 µm, 16 to 20 µm, 17 to 20 µm, or 18 to 19 µm. In certain embodiments, the aerogel fiber has an average diameter of about 18.81 µm.

The aerogel fiber can have a fiber tenacity between 5 to 20 cN/tex, 6 to 20 cN/tex, 7 to 20 cN/tex, 8 to 20 cN/tex, 9 to 20 cN/tex, 10 to 20 cN/tex, 11 to 20 cN/tex, 12 to 20 cN/tex, 13 to 20 cN/tex, 14 to 20 cN/tex, 15 to 20 cN/tex, 16 to 20 cN/tex, 17 to 20 cN/tex, 17 to 19 cN/tex, 17 to 18 cN/tex, . In certain embodiments, the aerogel fiber has a fiber tenacity of about 17.1 cN/tex.

In certain embodiments, the aerogel fiber has an elongation at break of 0.1-10%, 0.5-10, 1-10%, 1-9%, 1-8%, 1-7%, 1-6%, 1-5%, 1-4%, 2-4%, 3-4%, 3-3.5%, 0.1-9%, 0.1-8%, 0.1-7%, 0.1-6%, 0.1-5%, 0.5-5%, 0.5-4.5%, 0.5-4%, 0.5-3.5%, 1-3.5%, 1.5-3.5%, 2-3.5%, or 2.5-3.5%. In certain embodiments, the aerogel fiber has an elongation at break of about 3.3%.

In certain embodiments, the aerogel fiber has a linear density of 0.01 to 0.2 tex, 0.05 to 0.2 tex, 0.1 to 0.2 tex, 0.11 to 0.2 tex, 0.12 to 0.2 tex, 0.13 to 0.2 tex, 0.14 to 0.2 tex, 0.15 to 0.2 tex, 0.16 to 0.2 tex, 0.17 to 0.2 tex, 0.17 to 0.19 tex, or 0.17 to 0.18 tex,. In certain embodiments, the aerogel fiber has a linear density of about 0.174 tex.

The present disclosure also provides a textile comprising the aerogel fiber described herein. The textile is not particularly limited. In certain embodiments, the textile is selected from the group consisting of a staple fiber, a yarn, a fabric, a garment, a linen, a drapery, an upholstery, or combinations thereof.

Yarns may include, for instance, multiple staple fibers that are twisted together, filaments laid together without twist, filaments laid together with a degree of twist, and a single filament with or without twist. The yarn may or may not be texturized. Suitable fabrics may likewise include, for instance, woven fabrics, knit fabrics, and non-woven fabrics. Garments may be apparel and industrial garments. Fabrics and textiles may include home goods, such as linens, drapery, and upholstery (automotive, boating, airline included).

In certain embodiments, the textile further comprises one or more additional fibers selected from the group consisting of a natural fiber, a synthetic fiber, a semi-synthetic fiber, and combinations thereof.

Natural organic fibers may be of any plant or animal origin, and include, for example, those fibrous materials derived from natural products containing celluloses, such as any one or a combination of wood, bamboo, cotton, banana, piña, hemp ramie, linen, coconut palm, soya, milk, hoya, bagasse, kanaf, retting, mudrar, silk, wool, cashmere, alpaca, angora wool, mohair, shearling, vicuña, shahtoosh, and the like.

Semi-synthetic fibers may include, for example, any one or a combination of viscose, cuprammonium, rayon, polynosic, lyocell, cellulose acetate, and the like.

Synthetic fibers may include, for example, acrylic, Kevlar, modacrylic, nomex, spandex, nylon, polyester, acrylic, rayon, acetate and the like.

In certain embodiments, the textile comprises the aerogel fiber described herein and one or more additional fibers in a mass ratio of 1:9 to 9:1; 1:9 to 4:1; 1:9 to 7:3; 1:9 to 3:2; 1:9 to 1:1; 1:4 to 1:1; 3:7 to 1:1; 3:7 to 2:3; 1:4 to 4:1; 3:7 to 7:3; 2:3 to 3:2; or 9:11 to 11:9, respectively. In certain embodiments, the textile comprises the aerogel fiber described herein and one or more additional fibers in a mass ratio of about 1:1, respectively. In certain embodiments, the textile comprises the aerogel fiber described herein and wool fibers in a mass ratio of 1:9 to 9:1; 1:9 to 4:1; 1:9 to 7:3; 1:9 to 3:2; 1:9 to 1:1; 1:4 to 1:1; 3:7 to 1:1; 3:7 to 2:3; 1:4 to 4:1; 3:7 to 7:3; 2:3 to 3:2; or 9:11 to 11:9, respectively. In certain embodiments, the textile comprises the aerogel fiber described herein and wool fibers in a mass ratio of about 1:1, respectively.

In certain embodiments, the textile comprises the aerogel fiber described herein and wool. Advantageously, textiles comprising wool and the aerogel fiber described herein exhibit higher thermal resistance and reduced weight relative to an equivalent textile comprising only wool (for example, in certain embodiments, an equivalent textile consists of wool and has the same or substantially the same (e.g., ±4%, ±3%, ±2%, ±1%, or ±0.5% of the referenced value) yarn diameter, porosity, yarn count, and constructed using the same knitting method, etc). The thermal resistance of the textiles described herein can be measured using any method known in the art, such as GB 11048-89, Method A.

For example, a textile comprising the aerogel fiber and wool can have a thermal resistance between 1-50%, 5-50%, 5-45%, 5-40%, 5-35%, 5-30%, 5-25%, 5-20%, 5-15%, 5-10%, 10-50%, 15-50%, 20-50%, 25-50%, 30-50%, 40-50%, 45-50%, 10-25%, 15-25%, 20-25%, 10-45%, 15-40%, 20-35%, or 25-30% higher as compared with an equivalent textile consisting of wool. In certain embodiments, a textile comprising the aerogel fiber and wool in a mass ratio of 2:3 to 3:2, respectively, can have a thermal resistance between 9-25%, 10-24%, 11-23%, 12-22%, 13-21%, 14-20%, 15-20%, 15-19%, 15-18%, 15-17%, 15-16%, 16-18%, or 16-17% higher as compared with an equivalent textile consisting of wool. In certain embodiments, a textile comprising the aerogel fiber and wool in a mass ratio of about 1 to about 1, respectively, can have a thermal resistance of about 16.7% higher as compared with an equivalent textile consisting of wool.

A textile comprising the aerogel fiber and wool in a mass ratio of 2:3 to 3:2, respectively, can have a weight between 24-36% lower as compared with an equivalent textile consisting of wool. In certain embodiments, a textile comprising the aerogel fiber and wool in a mass ratio of about 1 to about 1, respectively, can have a weight about 29% lower as compared with an equivalent textile consisting of wool.

The thermal insulation properties of the textiles described herein are not impacted to a substantial degree by laundering the textile. For example, the thermal insulation properties of the textiles described herein may only change by no more than 20%, no more than 15%, no more than 10%, or no more than 5% after laundering ten times.

Also provided is a method of preparing the aerogel fiber described herein, the method comprising: providing a spinning solution comprising the aerogel polymer; wet-spinning the spinning solution thereby forming a filament comprising the aerogel polymer; wet-stretching the filament; thereby forming a wet-stretched filament; and freeze-drying the wet-stretched filament thereby forming the aerogel fiber.

The spinning solution can comprise any solvent in which the aerogel polymer is soluble. Suitable solvents include, but are not limited to, water, an organic solvent, or mixtures thereof. The organic solvent can comprise dimethylacetamide, dimethyl formamide, dimethyl sulfoxide, *N*-methyl-2-pyrrolidone, acetone, acetonitrile, methanol, ethanol, isopropanol, or a combination thereof. In certain embodiments, the spinning solution comprises water. In certain embodiments, the spinning solution does not comprise an ice regulator, such as one or more of sodium chloride, ethylene glycol and dimethyl sulfoxide.

The step of wet-spinning the spinning solution can comprise passing the spinning solution through a spinneret (such as a multifilament spinneret) into a coagulation bath.

The coagulation bath can comprise any solvent in which the aerogel polymer has low solubility. In certain embodiments, the coagulation bath comprises an aqueous solvent comprising a salt comprising one or more cations selected from the group consisting of Li⁺, Ca²⁺, Mg²⁺, Cu¹⁺, Cu²⁺, Zn²⁺, and Al³⁺ and one or more anions selected from the group consisting of halides, nitrate, phosphate, carbonate, sulfate, acetate, alkoxides, and the like. In certain embodiments, the coagulation bath comprises calcium chloride.

The salt and the aerogel polymer can be combined in any mass ratio sufficient to at least partially coagulate the aerogel polymer under the wet-spinning conditions. In certain embodiments, the salt and the aerogel polymer are present at mass ratio between 1:100 to 100:1, 1:9 to 9:1, 1:5 to 5:1 1:4 to 4:1, 1:3 to 3:1, 2:3 to 3:2, 1:1 to 9:1, 3:2 to 9:1, 7:3 to 9:1, or 4:1 to 9:1, respectively. In certain embodiments, the salt and the aerogel polymer are present at mass ratio of about 8:1.

In instances in which the aerogel polymer comprises sodium alginate, oxidized cellulose, or a mixture thereof, anionic moieties present in the aerogel polymer can be crosslinked *in situ* by the salt present in the coagulation bath thereby crosslinking the aerogel polymer.

The spinning solution can be passed through the spinneret at a flow rate between 0.1 to 5, 0.5 to 5, 0.5 to 4.5, 1.0 to 4.0, 1.5 to 3.5, 2.0 to 3.5, 2.5 to 3.5, or 2.5 to 3.0 meters/minute. In certain embodiments, the spinning solution is passed through the spinneret at a rate about 2.8 meters/minute.

The step of wet-stretching can comprise stretching the filament at a total drawing ratio between 100-500%, 150-500%, 200-500%, 200-450%, 200-400%, 250-400%, 250-350%, or 300-350%. In certain embodiments, the step of wet-stretching comprises stretching the filament at a total drawing ratio about 320%.

The step of wet-stretching can comprise stretching the filament can be conducted a temperature between 30 to 60° C, 40 to 60° C, or 40 to 50° C. In certain embodiments, the step of wet-stretching can comprise stretching the filament can be conducted at about 45° C.

The wet-stretched filament can be subjected to freeze-drying thereby forming the aerogel fiber. Freeze-drying can be accomplished using by reducing the temperature (e.g., to -100° C to - 20° C) of the wet-stretched filament and then lowering the pressure, which removes liquid present in the wet-stretched filament and thereby forming the aerogel fiber.

### EXAMPLES

### Example 1

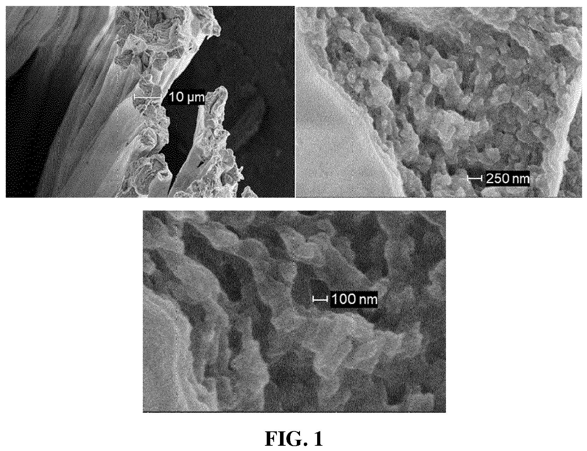

An aerogel fiber comprising sodium alginate was prepared as follows. 5% w/w sodium alginate in water was spun by wet-spinning at 80° C using calcium chloride aqueous solution (10% w/w) at room temperature as coagulation bath via a multifilament spinneret (500 F) of 70 microns in diameter, at a flow rate of 2.8 m/min. Calcium chloride is used as crosslinking agent for sodium alginate. The resulting fibers were wet-stretched in water at 45° C at a total drawing ratio of 320%. These fibers were subsequently subjected to freezing at -80° C for 3 hours and lyophilized for 48 hours to provide aerogel fiber with fiber tenacity at 17.1 cN/tex and elongation at break at 3.3% (determined in accordance with GB/T 4711-84), with fiber diameter of 18.81 microns (determined in accordance with ASTM D2130-13), linear density of 1.57 denier (0.17 tex, determined in accordance with ASTM D1577-07). Figure 1 provides a cross-sectional view of the said fiber. Nanoporous structure was observed in these SEM images with pore sizes in the range of 100 to 250 nm.

In comparison, mercerized wool fibers have a diameter of 18 microns, linear density of 3 denier (0.33 tex), fiber tenacity of 1.99 cN/tex and elongation at break of 37.7%.

### Example 2

A composite yarn comprising 50% w/w of the aerogel fiber prepared in Example 1 was fabricated by mixing mercerized wool fibers and aerogel fibers via carding process. These were reinforced as strips by a folding machine. These strips were twisted at 30 to 40 per meter as roving, which was subsequently twisted at 610 per meter into yarn with a yarn count of 26 Nm. Two yarns were folded and twisted into one with yarn count of 2/26 Nm and steamed under pressure. The yarns were determined to have an average diameter of 316 ± 10 microns.

### Example 3

A single jersey knitted fabric comprising the composite yarn from Example 2 had a thermal resistance of 0.035 m²K/W (determined in accordance with GB 11048-89, Method A), Clo value of 0.23 and grammage of 343 g/m². In comparison, a single jersey knitted fabric comprising wool yarn from Comparative Example 2 having a thermal resistance of 0.03 m²K/W, Clo value of 0.2 and grammage of 485.9 g/m².

### Comparative Example 1

5% w/w sodium alginate in water (1 kg of dope solution having 5% w/w sodium alginate) was spun by wet-spinning at 80° C using calcium chloride aqueous solution (4 kg water having 10% w/w calcium chloride) at room temperature as coagulation bath via a multifilament spinneret (500 F) of 70 microns in diameter, at a flow rate of 2.8 m/min. The resulting fibers were wet-stretched in water at 45° C at a total drawing ratio of 320%. These are dried at 60° C to provide fibers with fiber tenacity at 19.5 cN/tex and elongation at break at 3.3%, with fiber diameter of 23.06 microns and linear density of 0.31 tex.

### Comparative Example 2

A wool yarn comprising 100 % w/w of the said mercerized wool fiber was fabricated by carding process. These were reinforced as strips by a folding machine. These strips were twisted at 30 to 40 per meter as roving, which was subsequently twisted at 650 per meter into yarn with a yarn count of 20 Nm. Two yarns were folded and twisted into one with yarn count of 2/20 Nm and steamed under pressure. The said yarns are measured with an average diameter of 281 ± 16 microns.

### Comparative Example 3

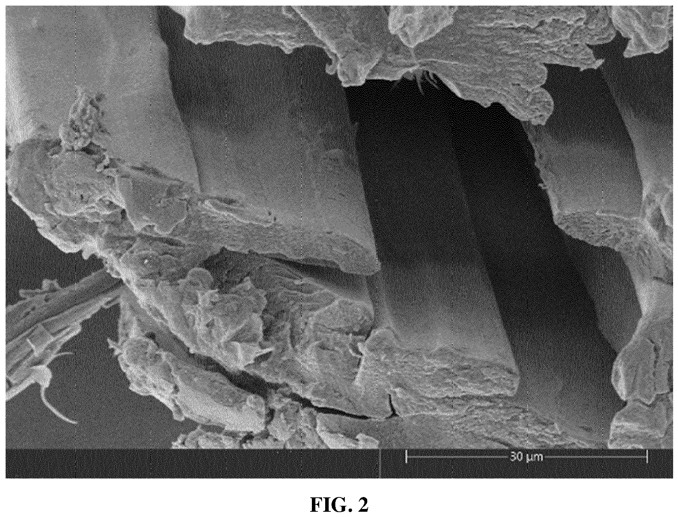

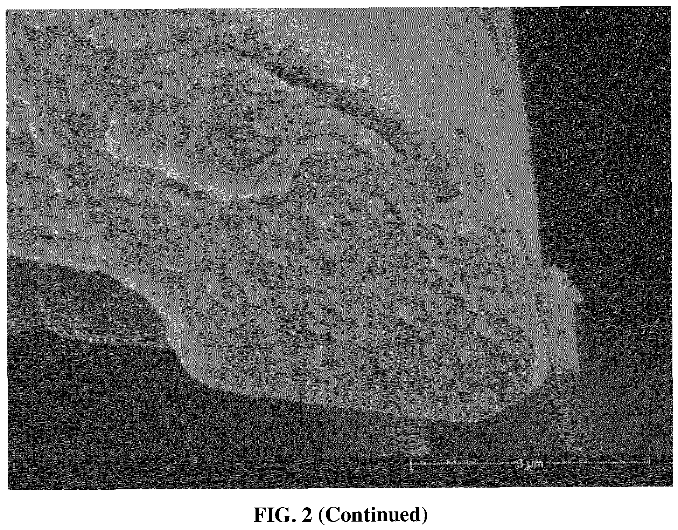

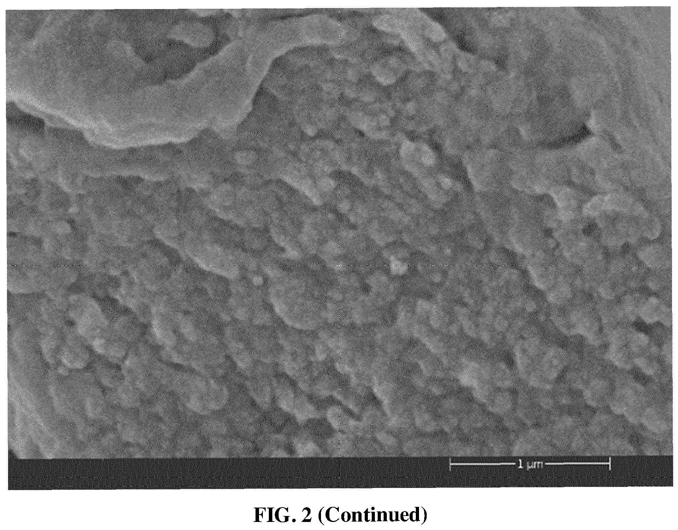

5% w/w sodium alginate in water was spun by wet-spinning at 80° C using calcium chloride aqueous solution (5% w/w) at room temperature as coagulation bath via a multifilament spinneret (500 F) of 70 microns in diameter, at a flow rate of 2.8 m/min. Calcium chloride is used as crosslinking agent for sodium alginate. The resulting fibers were wet-stretched in water at 45° C at a total drawing ratio of 320%. These fibers were subsequently subjected to freezing at -20° C for 3 hours and lyophilized for 48 hours to provide aerogel fibers with fiber tenacity at 20 cN/tex and elongation at break at 3.22%, with fiber diameter of 20.18 microns, and linear density of 0.25 tex. Figure 2 provides a cross-sectional view of the thus formed fiber.

### Comparative Example 4

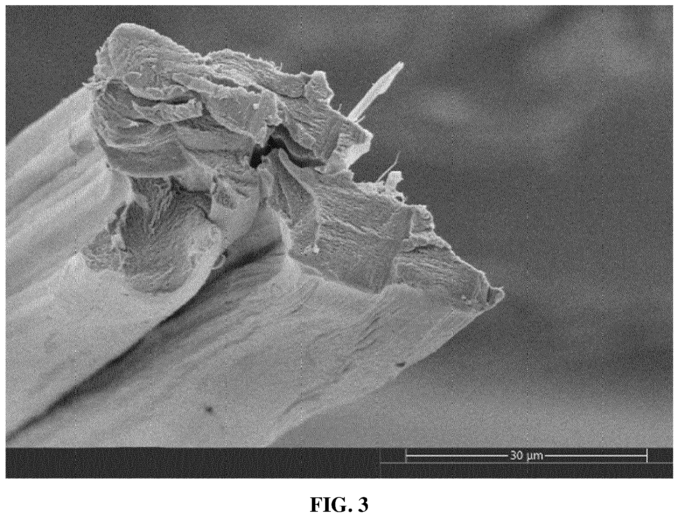

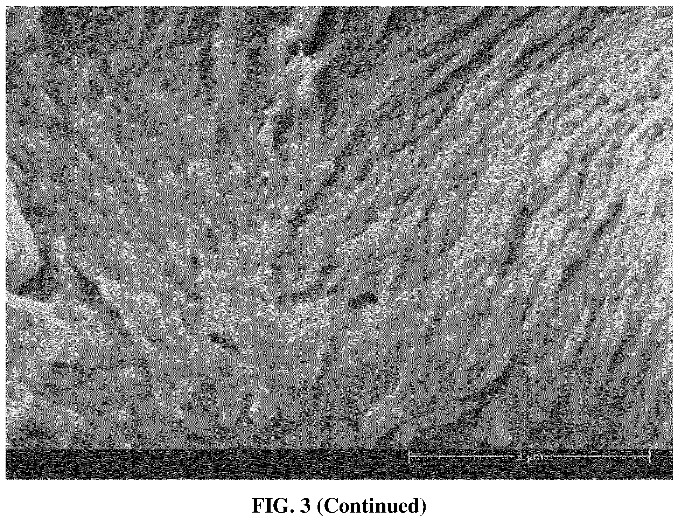

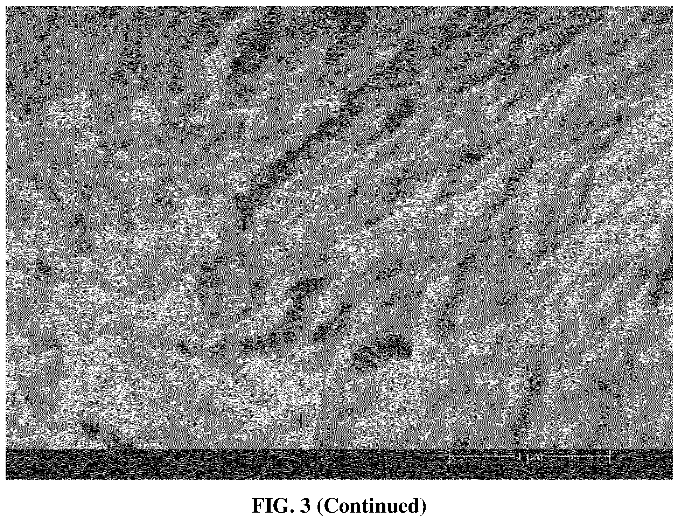

5% w/w sodium alginate in water was spun by wet-spinning at 80° C using calcium chloride aqueous solution (10% w/w) at room temperature as coagulation bath via a multifilament spinneret (500 F) of 70 microns in diameter, at a flow rate of 2.8 m/min. Calcium chloride is used as crosslinking agent for sodium alginate. The resulting fibers were wet-stretched in water at 45° C at a total drawing ratio of 320%. These fibers were subsequently subjected to freezing at -20° C for 3 hours and lyophilized for 48 hours to provide aerogel fibers with fiber tenacity at 18 cN/tex and elongation at break at 3.38%, with fiber diameter of 19.37 microns, and linear density of 0.24 tex. Figure 3 provides a cross-sectional view of the thus formed fiber.

### Comparative Example 5

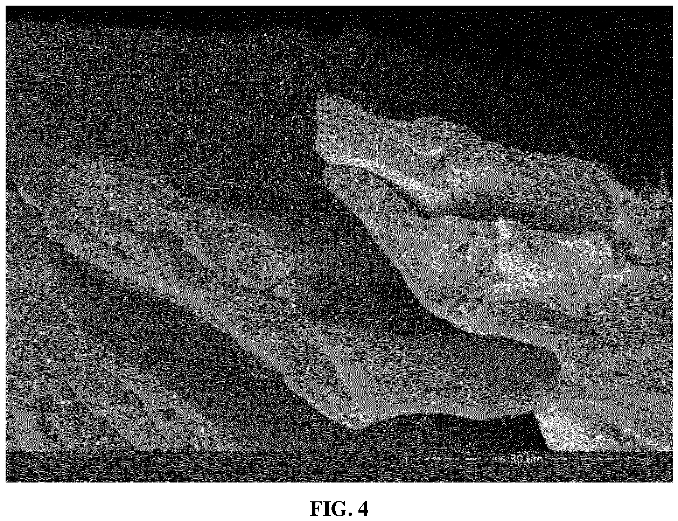

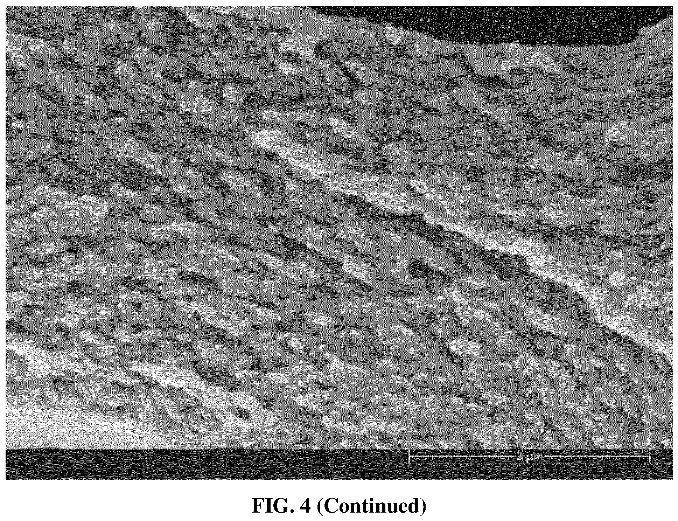

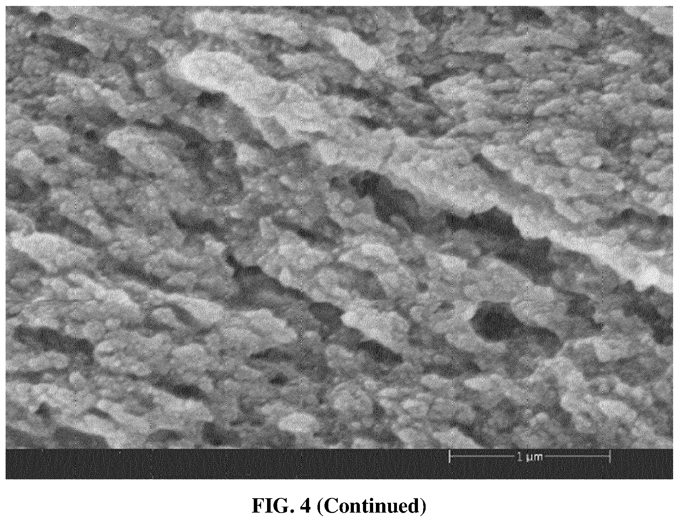

5% w/w sodium alginate in water was spun by wet-spinning at 80° C using calcium chloride aqueous solution (5% w/w) at room temperature as coagulation bath via a multifilament spinneret (500 F) of 70 microns in diameter, at a flow rate of 2.8 m/min. Calcium chloride is used as crosslinking agent for sodium alginate. The resulting fibers were wet-stretched in water at 45° C at a total drawing ratio of 320%. These fibers were subsequently subjected to freezing at -50° C for 3 hours and lyophilized for 48 hours to provide aerogel fibers with fiber tenacity at 20 cN/tex and elongation at break at 3.15%, with fiber diameter of 17.92 microns, and linear density of 0.25 tex. Figure 4 provides a cross-sectional view of the thus formed fiber.

**Table 1. Properties of Fibers Prepared via Various Freezing Temperatures and Concentrations of Coagulation Bath**

| Entries | Freezing temperature | Concentration of CaCl₂ | Fiber tenacity (cN/tex) | Elongation at Break (%) | Fiber diameter (microns) | Linear density (tex) |
|---|---|---|---|---|---|---|
| Example 1 | -80° C | 10% w/w | 17.1 | 3.3 | 18.81 | 0.17 |
| Comparative Example 1 | N/A | 10% w/w | 19.5 | 3.3 | 23.06 | 0.31 |
| Comparative Example 3 | -20° C | 5% w/w | 20 | 3.22 | 20.18 | 0.25 |
| Comparative Example 4 | -20° C | 10% w/w | 18 | 3.38 | 19.37 | 0.24 |
| Comparative Example 5 | -50° C | 5% w/w | 20 | 3.15 | 17.92 | 0.25 |

## Claims

1. An aerogel fiber comprising an aerogel polymer selected from the group consisting of polylactic acid (PLA), sodium alginate, cellulose, oxidized cellulose, and a mixture thereof, wherein the aerogel polymer is optionally crosslinked with a crosslinking agent and the aerogel fiber has a linear density 0.20 tex or less, a fiber tenacity of 5 to 20 cN/tex, an elongation at break of 3 to 20%, and an average diameter between 5 µm to 200 µm.

2. The aerogel fiber of claim 1, wherein the aerogel polymer comprises cellulose, 2,2,6,6-tetramethylpiperidine 1-oxyl (TEMPO)-oxidized cellulose, microfibrillated cellulose, TEMPO-oxidized microfibrillated cellulose, cellulose nanofibrils, or a mixture thereof.

3. The aerogel fiber of claim 1, wherein the aerogel polymer is crosslinked with a crosslinking agent selected from the group consisting of methyltrimethoxysilane, 1,4-butanediol diglycidyl ether (BDDE), trimethylolpropane triglycidyl ether, pentaerythritol tetraglycidyl ether, a salt, and a mixture thereof.

4. The aerogel fiber of claim 1, wherein the aerogel polymer is crosslinked with calcium chloride.

5. The aerogel fiber of claim 1, wherein the aerogel polymer comprises sodium alginate.

6. The aerogel fiber of claim 1, wherein the aerogel fiber further comprises hydrophobic alkylsilanes, aliphatic esters, or a combination thereof grafted on an exterior surface of the aerogel fiber.

7. The aerogel fiber of claim 1, wherein the aerogel fiber has an average diameter of 5 to 30 µm.

8. The aerogel fiber of claim 1, wherein the aerogel fiber has a fiber tenacity of 15 to 20 cN/tex.

9. The aerogel fiber of claim 1, wherein the aerogel fiber has a liner density between 0.1 to 0.2 tex.

10. The aerogel fiber of claim 1, wherein the aerogel is mesoporous, nanoporous, or microporous.

11. The aerogel fiber of claim 1, wherein the aerogel fiber comprises pores having an average diameter between 100 to 250 nm.

12. The aerogel fiber of claim 1, wherein the aerogel fiber comprises sodium alginate, the aerogel fiber has a fiber tenacity of 15 to 20 cN/tex, an average diameter between 15 µm to 20 µm, a liner density between 0.15 to 0.2 tex, and the aerogel fiber comprises pores having an average diameter between 100 to 250 nm.

13. A textile comprising the aerogel fiber of claim 1.

14. The textile of claim 13, wherein the aerogel fiber comprises sodium alginate, the aerogel fiber has a fiber tenacity of 15 to 20 cN/tex, an average diameter between 15 µm to 20 µm, and a liner density between 0.15 to 0.20 tex, and the aerogel fiber comprises pores having an average diameter between 100 to 250 nm.

15. The textile of claim 13, wherein the textile is selected from the group consisting of a staple fiber, a yarn, a fabric, a garment, a linen, a drapery, an upholstery, and combinations thereof.

16. The textile of claim 13, wherein the textile further comprises one or more additional fibers selected from the group consisting of a natural fiber, a synthetic fiber, a semi-synthetic fiber, and a combination thereof.

17. The textile of claim 16, wherein the aerogel fiber and the one or more additional fibers are present at a mass ratio between 1:9 to 9:1 in the textile.

18. The textile of claim 13 further comprising wool, wherein the textile has a higher thermal resistance and a lower mass as compared with an equivalent textile consisting of wool.

19. The textile of claim 13 further comprising wool, wherein the aerogel fiber and the wool are present in the textile in a mass ratio of 2:3 to 3:2, respectively and the textile has a thermal resistance between 9-25% higher as compared with an equivalent textile consisting of wool.

20. A method of preparing the aerogel fiber of claim 1, the method comprising: providing a spinning solution comprising the aerogel polymer; wet-spinning the spinning solution thereby forming a filament comprising the aerogel polymer; wet-stretching the filament; thereby forming a wet-stretched filament; and freeze-drying the wet-stretched filament thereby forming the aerogel fiber.

21. The method of claim 20, wherein the step of wet-spinning the spinning solution comprises passing the spinning solution through a multifilament spinneret at a flow rate between 0.1 to 5 meters/minute into a coagulation bath comprising calcium chloride.

22. The method of claim 20, wherein the step of wet-stretching comprises stretching the filament at 30 to 60° C at a total drawing ratio between 100-500%.

23. The method of claim 20, wherein the step of wet-spinning the aerogel polymer comprises passing the solution through a multifilament spinneret of 50 to 100 microns in diameter at a temperature of 70-90° C and a flow rate between 2.5 to 3 meters/minute into a coagulation bath comprising calcium chloride; and the step of wet-stretching comprises stretching the filament at 40 to 50° C at a total drawing ratio between 300-350%.
